# EUROPÄISCHE PATENTANMELDUNG

(11) **EP 4 112 279 A1**
(43) Veröffentlichungstag der Anmeldung: **04.01.2023**
(21) Anmeldenummer: 21182912.2
(22) Anmeldetag: 30.06.2021
(51) Int. Cl.: B29C 65/02, B64C 1/06, B64C 1/12, B64C 3/26, B64F 5/10, B29C 65/08, B29C 65/14, B29C 65/16, B29K 105/06, B29K 307/04, B29K 101/12, B29K 71/00, B29L 31/30

(54) **VERFAHREN UND BAUTEILSEGMENT ZUR HERSTELLUNG EINES VERSTEIFTEN FLÄCHIGEN BAUTEILS FÜR LUFTFAHRZEUGE, SOWIE LUFTFAHRZEUG**

(71) Anmelder: Airbus Operations GmbH, 21129 Hamburg (DE)
(72) Erfinder: Barlag, Carsten, 21129 Hamburg (DE); Piepenbrock, Joachim, 21129 Hamburg (DE)
(74) Vertreter: KASTEL Patentanwälte PartG mbB

(57) **Zusammenfassung**

Bei einem Verfahren zur Herstellung eines versteiften flächigen Bauteils (14, 24) für Luftfahrzeuge, welches ein Hautfeld (15) und eine Versteifungsstruktur (16) umfasst, werden mehrerer Bauteilsegmente (10, 20) bereitgestellt, die jeweils als ein längliches Profil aus einem faserverstärkten thermoplastischen Material ausgebildet sind, wobei jedes Bauteilsegment (10, 20) einen flächig geformten ersten Profilbereich (11) und einen als Versteifungsprofil geformten zweiten Profilbereich (12) umfasst. Die Bauteilsegmente (10, 20) werden aneinandergefügt, wobei jeweils der erste Profilbereich (11) eines Bauteilsegments (10, 20) mit dem zweiten Profilbereich eines benachbarten Bauteilsegments (10, 20) zumindest teilweise überlappt. Die Bauteilsegmente (10, 20) werden in den überlappenden Profilbereichen verschweißt. Dabei bilden die ersten Profilbereiche (11) der Bauteilsegmente (10, 20) das Hautfeld (15) des Bauteils (14, 24) bilden, und die zweiten Profilbereiche (12) bilden die Versteifungsstruktur (16) des Bauteils (14, 24).

## Beschreibung

Die Erfindung betrifft ein Verfahren zur Herstellung eines versteiften flächigen Bauteils für Luftfahrzeuge, wobei das herzustellende Bauteil ein Hautfeld und eine Versteifungsstruktur umfasst. Weiterhin betrifft die Erfindung ein Bauteilsegment zur Herstellung eines versteiften flächigen Bauteils für Luftfahrzeuge, und ein Luftfahrzeug.

Mit dem Verfahren werden insbesondere Bauteile wie zum Beispiel versteifte thermoplastische Platten oder Paneele, Schalenbauteile, Abdeckungen und Ähnliches hergestellt.

Bauteile für Luftfahrzeuge müssen über eine hohe Festigkeit und Steifigkeit verfügen und dabei ein möglichst geringes Gewicht aufweisen. Als Materialien eignen sich daher insbesondere faserverstärkte Thermoplaste. Die Bauteile werden zum Beispiel als Schalenelemente, Paneele oder Platten, Abdeckungen, usw. ausgebildet, die zumeist an einer Seite durch Versteifungselemente verstärkt werden, um dadurch den oft dünnwandigen, flächigen Bauteilen die erforderliche Steifigkeit oder Festigkeit zu verleihen. Im Flugzeugbau werden zum Beispiel der Rumpf, Rumpfschalen, Höhenleitwerke, Seitenleitwerke, Tragflächen, usw. mit derartigen Bauteilen hergestellt.

EP 3 733 391 A1 beschreibt zum Beispiel ein Verfahren zum Herstellen eines versteiften flächigen Bauteils aus Polymermaterial. Dabei werden Versteifungshohlprofile wie Stringer und eine Außenhaut aus thermoplastischem Verbundwerkstoff hergestellt. Die Stringer werden anschließend mit der Außenhaut in Kontakt gebracht und der thermoplastische Verbundwerkstoff wird unter Einwirkung von Hitze und Druck bei den Kontaktflächen zwischen der Außenhaut und den Stringern geschmolzen.

DE 10 2018 215 356 A1 zeigt ein Verfahren zum Herstellen eines Rumpfbauteils für ein Luftfahrzeug. Dabei werden auf einer Oberfläche eines sich flächig erstreckenden Schalenteils aus einem Faserverbundmaterial Versteifungsprofile aus einer Vielzahl von übereinander liegenden Schichten aufgebaut. Die Schichten werden jeweils durch Auftragen von Filamenten, die jeweils ein in ein Thermoplastmaterial eingebettetes Faserbündel aufweisen, ausgebildet.

Insbesondere bei Flugzeugen sind die versteiften flächigen Bauteile oft großformatig. Dadurch kann der Aufwand des Verbindens mehrerer Bauteile verringert werden. Jedoch erfordern die großen Bauteile bei der Herstellung sehr große formgebende Werkzeuge, Pressen und Autoklaven, die hohe Kosten verursachen.

Die Erfindung hat sich zur Aufgabe gestellt, den Aufwand bei der Herstellung von Bauteilen zu verringern und die Kosten zu reduzieren.

Die Aufgabe wird gelöst durch das Verfahren nach Patentanspruch 1.

Vorteilhafte Ausgestaltungen sind Gegenstand der Unteransprüche.

Gemäß einem ersten Aspekt schafft die Erfindung ein Verfahren zur Herstellung eines versteiften flächigen Bauteils für Luftfahrzeuge, wobei das herzustellende Bauteil ein Hautfeld und eine Versteifungsstruktur umfasst, umfassend die Schritte:
a) Bereitstellen mehrerer Bauteilsegmente, die jeweils als ein längliches Profil aus einem faserverstärkten thermoplastischen Material ausgebildet sind, wobei jedes Bauteilsegment einen flächig geformten ersten Profilbereich und einen als Versteifungsprofil geformten zweiten Profilbereich umfasst;
b) Aneinanderfügen der Bauteilsegmente, wobei jeweils der erste Profilbereich eines Bauteilsegments mit dem zweiten Profilbereich eines benachbarten Bauteilsegments zumindest teilweise überlappt; und
c) Verschweißen der Bauteilsegmente in den überlappenden Profilbereichen, um das Bauteil zu bilden, wobei die ersten Profilbereiche der Bauteilsegmente das Hautfeld des Bauteils bilden, und die zweiten Profilbereiche der Bauteilsegmente die Versteifungsstruktur des Bauteils bilden.

Die Erfindung ermöglicht eine schnelle Herstellung auch sehr großer, flächiger versteifter Bauteile für Luftfahrzeuge aus faserverstärktem thermoplastischem Material, ohne dass entsprechend große Werkzeuge wie Pressen, Formwerkzeuge und Autoklaven erforderlich sind. Durch die Fertigung aus einem oder mehreren Profilen können Arbeitsschritte schneller und mit höherem Automatisierungsgrad durchgeführt werden.

Das Pressen von kompletten integralen Komponenten oder das nachfolgende Schweißen von Versteifungselementen auf die Haut bzw. das Hautfeld entfällt. Dadurch, dass Haut und Versteifungselemente zusammen als ein Teil in jedem Bauteilsegment geformt und bereitgestellt werden, müssen diese nicht mehr separat voneinander hergestellt oder ausgebildet werden. Insbesondere entfällt auch ein nachträgliches Ausbilden von Versteifungselementen auf der Haut.

Bevorzugt erstrecken sich der erste Profilbereich und der zweite Profilbereich nebeneinander in Längsrichtung des Bauteilsegments.

Vorteilhafterweise werden der erste Profilbereich und der zweite Profilbereich seitlich aneinandergefügt.

Bevorzugt umfassen die zweiten Profilbereiche der Bauteilsegmente jeweils mindestens einen flächig ausgebildeten Verbindungsabschnitt zum flächigen Verschweißen und einen in Querrichtung des jeweiligen Bauteilsegments angrenzenden Versteifungsabschnitt, der höher oder tiefer liegt als der Verbindungsabschnitt.

Vorteilhaft werden die zweiten Profilbereiche der Bauteilsegmente als Omega-, Z-, C-, und/oder T-Versteifungsprofil ausgebildet.

Beispielsweise bilden im hergestellten Bauteil die zweiten Profilbereiche zusammen mit den ersten Profilbereichen Hohlprofile, Omega-Profile, geschlossene Omega-Profile, Z-Profile, T-Profile und/oder C-Profile.

Bevorzugt werden die Bauteilsegmente durch Strangziehen bzw. Pultrusion und/oder durch Rollformen hergestellt.

Vorteilhaft werden mehrere Bauteilsegmente aus einem einzigen Profil geschnitten und anschließend seitlich aneinandergefügt.

Bevorzugt werden die Bauteilsegmente zugeschnitten und/oder umgeformt.

Beispielsweise können die Bauteilsegmente einzeln vor und/oder gemeinsam nach dem Verschweißen umgeformt werden. Beispielsweise werden die Bauteilsegmente und/oder das Bauteil gekrümmt, wobei es insbesondere auch zylindrisch, als eine Röhre oder als ein Segment einer Röhre bzw. eines Zylinders geformt werden kann.

Durch das Verfahren wird insbesondere ein durch Stringer und/oder Spanten verstärktes Schalenelement hergestellt. Insbesondere wird als Bauteil ein Rumpfbauteil wie z.B. ein Rumpfsegment oder ein Rumpf, ein Flügelbauteil, ein Seitenleitwerk, ein Höhenleitwerk, eine Landeklappe, oder jeweils zumindest ein Teil davon.

Vorteilhaft werden die Bauteilsegmente aus einem Hochleistungsthermoplast als Matrixmaterial gefertigt.

Insbesondere wird zur Bildung des faserverstärkten thermoplastischen Materials ein Matrixmaterial verwendet, das ausgewählt wird aus der Gruppe Hochtemperatur-thermoplastische Polymere, Hochleistungskunststoffe, teilkristalline Hochleistungskunststoffe, Polyaryletherketone (PAEK) wie Polyetherketonketon (PEKK), Polyetherketon (PEK), Polyetheretherketon (PEEK), Polyetheretherketonketon (PEEKK) und Polyetherketon-etherketonketon (PEKEKK).

Bevorzugt umfasst das thermoplastische Material synthetische Fasern, besonders bevorzugt Kohlenstofffasern, die in das Matrixmaterial eingebettet sind.

Bevorzugt wird als Bauteil ein Schalenelement, ein Abdeckelement, ein ebenes Plattenelement, und/oder ein gekrümmtes Plattenelement hergestellt.

Vorteilhafterweise werden die Bauteilsegmente derart geformt, dass der zweite Profilbereich in Dickenrichtung gegenüber dem ersten Profilbereich versetzt ist. Der Versatz wird insbesondere senkrecht zur Flächenebene des ersten Profilbereichs ausgebildet und ist vorteilhafterweise so bemessen, dass beim Aneinanderfügen der Bauteilsegmente deren erste Profilbereiche eine Ebene bilden, auf der die zweiten Profilbereiche der aneinandergefügten Bauteilsegmente ausgebildet sind.

Vorzugsweise umfassen die Profilbereiche der Bauteilsegmente flächig ausgebildete Verbindungsbereiche, die mit den Hautbereichen jeweils benachbarter Bauteilsegmente flächig verschweißt werden und dabei insbesondere parallel zu diesen ausgerichtet sind.

Gemäß einem zweiten Aspekt schafft die Erfindung ein Bauteilsegment zur Herstellung eines versteiften flächigen Bauteils für Luftfahrzeuge, wobei das Bauteilsegment als ein Profil aus einem faserverstärkten thermoplastischen Material ausgebildet ist, und einen flächig geformten ersten Profilbereich und einen als Versteifungsprofil geformten zweiten Profilbereich umfasst, wobei das Bauteilsegment derart gestaltet ist, dass beim seitlichen Anfügen eines weiteren Bauteilsegments der erste Profilbereich des einen Bauteilsegments mit dem zweiten Profilbereich des anderen Bauteilsegments zumindest teilweise überlappt, um durch Verschweißen der Bauteilsegmente in den überlappenden Profilbereichen das versteifte flächige Bauteil zu bilden, wobei die ersten Profilbereiche der Bauteilsegmente ein Hautfeld des Bauteils bilden, und die zweiten Profilbereiche der Bauteilsegmente eine Versteifungsstruktur des Bauteils bilden.

Vorzugsweise erstrecken sich der erste und der zweite Profilbereich nebeneinander in Längsrichtung des Bauteilsegments.

Bevorzugt ist der zweite Profilbereich gegenüber dem ersten Profilbereich derart in der Höhe versetzt, dass beim Überlappen der Bauteilsegmente deren flächig geformte erste Profilbereiche eine Ebene bilden, auf der die zweiten Profilbereiche der aneinandergefügten Bauteilsegmente ausgebildet sind.

Vorteilhaft ist der zweite Profilbereich als Omega-, Z-, C-, und/oder T-Versteifungsprofil ausgebildet.

Insbesondere bildet jedes Bauteilsegment sowohl das Hautfeld als auch die Versteifungsstruktur des hergestellten Bauteils.

Bevorzugt ist das Bauteilsegment aus einem faserverstärktem Hochleistungsthermoplast gefertigt.

Vorzugsweise werden zur Verstärkung des thermoplastischen Materials Kohlenstofffasern verwendet.

Zum Beispiel ist das Bauteilsegment gekrümmt, vorzugsweise in seiner Querrichtung, sodass durch Verschweißen mehrerer Bauteilsegmente ein gekrümmtes Bauteil entsteht.

Bevorzugt ist das Bauteilsegment zur Verwendung in dem erfindungsgemäßen Verfahren ausgestaltet.

Vorteilhaft weist das Bauteilsegment die Merkmale der in dem erfindungsgemäßen Verfahren verwendeten Bauteilsegmente auf.

Gemäß einem dritten Aspekt schafft die Erfindung ein Luftfahrzeug, das ein Bauteil umfasst, das mit dem erfindungsgemäßen Verfahren und/oder mit dem erfindungsgemäßen Bauteilsegment hergestellt ist.

Das Bauteil ist insbesondere ein durch Stringer und/oder Spanten verstärktes Schalenelement. Beispielsweis kann das Bauteil auch gekrümmt sein, wobei es insbesondere auch zylindrisch, als eine Röhre oder als ein Segment einer Röhre geformt sein kann. Beispielsweise ist das hergestellte Bauteil ein Rumpfbauteil wie z.B. ein Rumpfsegment oder ein Rumpf, ein Flügelbauteil, ein Seitenleitwerk, ein Höhenleitwerk, eine Landeklappe, oder jeweils zumindest ein Teil davon.

Vorteile, Details, und Merkmale, die im Zusammenhang mit dem Verfahren zur Herstellung eines versteiften flächigen Bauteils beschrieben sind, gelten jeweils wechselseitig auch für die anderen Aspekte der Erfindung.

Ein Ausführungsbeispiel wird im Folgenden anhand der beigefügten Zeichnungen näher erläutert. Darin zeigen:
- Fig. 1: ein Bauteilsegment gemäß einer bevorzugten Ausführungsform der Erfindung, das in einem bevorzugten Ausführungsbeispiel des erfindungsgemäßen Verfahrens verwendet wird, in einer räumlichen schematischen Darstellung;
- Fig. 2: mehrere aneinandergefügte Bauteilsegmente, wie sie in Fig. 1 dargestellt sind, in einer schematischen Querschnittsdarstellung;
- Fig. 3: ein Bauteilsegment gemäß einer anderen bevorzugten Ausführungsform der Erfindung, das in einem bevorzugten Ausführungsbeispiel des erfindungsgemäßen Verfahrens verwendet wird, in einer räumlichen schematischen Darstellung;
- Fig. 4: mehrere aneinandergefügte Bauteilsegmente, wie sie in Fig. 3 dargestellt sind, in einer schematischen Querschnittsdarstellung; und
- Fig. 5: ein Luftfahrzeug, das Bauteile umfasst, die mit dem erfindungsgemäßen Verfahren oder mit dem erfindungsgemäßen Bauteilsegment hergestellt sind, in einer schematischen Ansicht von oben.

In den Figuren sind gleiche oder einander entsprechende Elemente jeweils mit den gleichen Bezugszeichen bezeichnet und werden daher nicht erneut beschrieben, sofern es nicht zweckmäßig erscheint. Die in der gesamten Beschreibung enthaltenen Offenbarungen sind sinngemäß auf gleiche Teile mit gleichen Bezugszeichen bzw. gleichen Bauteilbezeichnungen übertragbar. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen. Weiterhin können auch Einzelmerkmale oder Merkmalskombinationen aus den gezeigten und beschriebenen unterschiedlichen Ausführungsbeispielen für sich eigenständige, erfinderische oder erfindungsgemäße Lösungen darstellen.

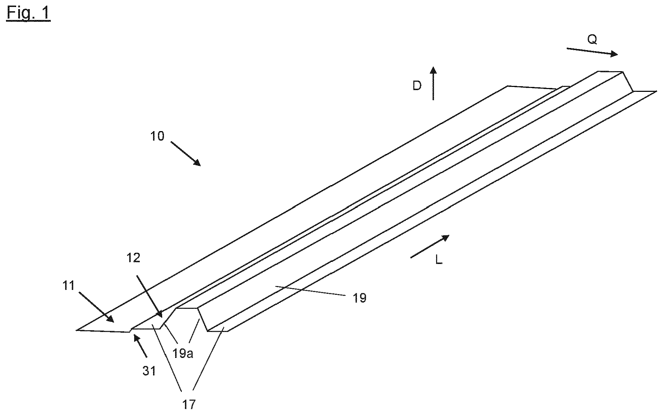

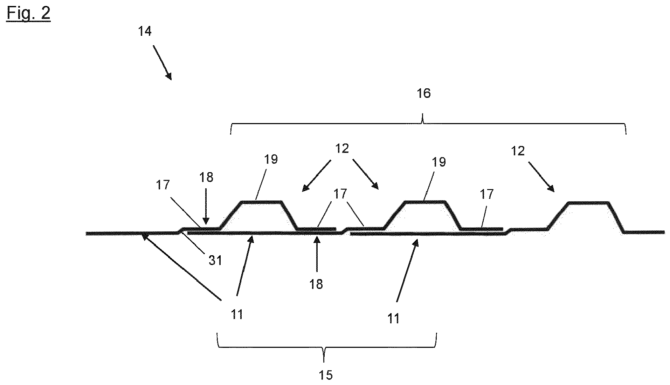

**Figur 1** zeigt ein Bauteilsegment 10 gemäß einer bevorzugten Ausführungsform der Erfindung, mit dem ein versteiftes flächiges Bauteil 14 hergestellt wird, wie in **Figur 2** als ein Ausführungsbeispiel gezeigt. In dem hier beschriebenen ersten Ausführungsbeispiel des erfindungsgemäßen Verfahrens werden mehrere Bauteilsegmente 10 bereitgestellt, um daraus das versteifte flächige Bauteil 14 herzustellen. Jedes Bauteilsegment 10 ist als ein Profil ausgebildet, das sich in einer Längsrichtung L erstreckt und aus einem faserverstärkten thermoplastischen Material gefertigt ist.

Das Bauteilsegment 10 umfasst einen flächig geformten ersten Profilbereich 11 und einen als Versteifungsprofil geformten zweiten Profilbereich 12. Die beiden Profilbereiche 11, 12 des Bauteilsegments 10 erstrecken sich nebeneinander in der Längsrichtung L des Bauteilsegments 10.

In einem nächsten Schritt des Herstellungsverfahrens werden die bereitgestellten Bauteilsegmente 10 seitlich aneinandergefügt, um das herzustellende Bauteil 14 zu bilden, wie es in Figur 2 gezeigt ist. Dabei überlappen sich jeweils der erste Profilbereich 11 eines Bauteilsegments 10 und der zweite Profilbereich 12 des benachbarten Bauteilsegments 10.

Anschließend werden die Bauteilsegmente 10 in den überlappenden Profilbereichen verschweißt, um das Bauteil 14 zu bilden. Dabei bilden die ersten Profilbereiche 11 der aneinandergefügten Bauteilsegmente 10 gemeinsam ein Hautfeld 15 des hergestellten Bauteils 14. Die zweiten Profilbereiche 12 der aneinandergefügten Bauteilsegmente 14 bilden gemeinsam eine Versteifungsstruktur 16 des hergestellten Bauteils 14.

Ein Verbindungsabschnitt 17 des zweiten Profilbereichs 12 zum flächigen Verschweißen mit dem ersten Profilbereich 11 eines benachbarten Bauteilsegments 10 ist erhöht gegenüber dem ersten Profilbereich 11 ausgebildet. Dadurch wird bewirkt, dass beim Zusammenfügen zweier Bauteilsegmente 10 deren erste Profilbereiche 11 in einer Ebene liegen.

In dem Bauteilsegment 10 bildet der Verbindungsabschnitt 17 gegenüber dem ersten Profilbereich 11 eine Stufe bzw. einen Versatz 31, welcher in Dickenrichtung D des Bauteilsegments 10 verläuft und im Wesentlichen der Dicke des flächigen, ersten Profilbereich 11 entspricht. Dadurch liegen die aneinandergefügten und miteinander verschweißten Bauteilsegmente 10 nebeneinander und grenzen in einer Ebene aneinander, wodurch sie das Hautfeld 15 des hergestellten Bauteils 24 bilden.

Das Verschweißen der Bauteilsegmente 10 erfolgt in den flächig ausgebildeten Verbindungsabschnitten 17, die im zweiten Profilbereich 12 jedes Bauteilsegments 10 ausgebildet sind und im zusammengefügten Zustand der Bauteilesegmente 10 parallel zu den jeweils angrenzenden, flächigen ersten Profilbereichen 11 ausgerichtet sind. Beim Verschweißen wird jeweils eine Schweißnaht 18 an den Kontaktflächen zwischen den Verbindungsabschnitten 17 und den flächigen ersten Profilbereichen 11 geschaffen.

Zum Verschweißen wird Wärme zugeführt bzw. erzeugt, um das thermoplastische Material in den Kontaktbereichen über seinen Schmelzpunkt zu bringen, was zum Beispiel mit Ultraschall, Infrarotstrahlung, Laserstrahlen oder anderen für diesen Zweck geeigneten Verfahren erfolgen kann. Auch kann das Verschweißen der aneinandergefügten Bauteilsegmente 10 zum Beispiel in einem Autoklaven erfolgen. Vorzugsweise wird die Wärme zum Erzeugen der Schweißnähte mithilfe eines Roboters gezielt in die Kontaktbereiche der Verbindungsabschnitte 17 eingebracht, wobei sich der Roboter entlang der Verbindungsabschnitte 17 bzw. über diesen bewegt.

Jedes Bauteilsegment 10 umfasst einen Versteifungsabschnitt 19, der dem Bauteilsegment die erforderliche Steifigkeit verleiht. Zu diesem Zweck ist der Versteifungsabschnitt 19 als eine Erhöhung gegenüber den Verbindungsabschnitten 17 im zweiten Profilbereich 12 ausgebildet, die an beiden Seiten des Versteifungsabschnitts 19 in Querrichtung Q des Bauteilsegments 10 an diesen angrenzen.

Auf diese Weise bildet jedes einzelne Bauteilsegmente 10 durch seinen zweiten Profilbereich 12 ein Omega-Versteifungsprofil mit schräg verlaufenden Flanken 19a des Versteifungsabschnitts 19. Beim Verschweißen entstehen pro Bauteilsegment 10 zwei Schweißnähte 18, d. h., es wird ein Omega-Paneel gebildet. Im verschweißten Zustand der aneinandergefügten Bauteilsegmente 10 ergibt sich eine Anzahl von geschlossenen Omega-Versteifungsprofilen bzw. Hohlprofilen, die nebeneinander und parallel zueinander auf der Haut 15 ausgebildet sind, die durch die flachen, ersten Profilbereiche 11 gebildet wird

In anderen Ausführungsformen der Erfindung, von denen eine als Beispiel weiter unten noch im Detail beschrieben wird, werden anders geformte Versteifungsprofile ausgebildet, insbesondere Z-, C- oder auch D-Versteifungsprofile.

Bevorzugt sind die Bauteilsegmente 10 aus einem Hochleistungsthermoplast als Matrixmaterial gefertigt, in dem Verstärkungsfasern vorzugsweise aus Kohlenstoff eingebettet sind. Das thermoplastische Material ist insbesondere ausgewählt aus der Gruppe Hochtemperatur-thermoplastische Polymere, Hochleistungskunststoffe, teilkristalline Hochleistungskunststoffe, Polyaryletherketone (PAEK) wie Polyetherketonketon (PEKK), Polyetherketon (PEK), Polyetheretherketon (PEEK), Polyetheretherketonketon (PEEKK) und Polyetherketon-etherketonketon (PEKEKK). Besonders bevorzug sind dabei PEEK und PEKK.

Der Schmelzpunkt der hier verwendeten Hochleistungsthermoplaste liegt bei über 300 °C, bevorzugt über 350 °C.

Die Bauteilsegmente 10 werden zum Beispiel durch Strangziehen oder Rollformen hergestellt. Vorteilhaft erfolgt die Herstellung kontinuierlich, wobei ein Profil aus dem faserverstärkten thermoplastischen Material zum Beispiel in einer Presse kontinuierlich erzeugt und anschließend in Bauteilsegmente mit der erforderlichen Länge geschnitten wird. Das Profil oder dessen Segmente können je nach Erfordernis zurechtgeschnitten und/oder umgeformt werden.

Zur Fertigung der Bauteilsegmente 10 können auch flache Bleche aus dem thermoplastischen Material als Vorerzeugnisse hergestellt werden, die anschließend in einer Presse umgeformt werden, um das Profil für die Bauteilsegmente zu erhalten. Je nach Erfordernis können sowohl das Profil, aus dem die Bauteilsegmente 10 gebildet werden, als auch die einzelnen Bauteilsegmente 10 zurechtgeschnitten und/oder durch Erhitzen und Pressen umgeformt werden. Beim Umformen werden die Bauteilsegmente 10 vor oder nach dem Verschweißen je nach Anwendungsfall zum Beispiel in der Querrichtung Q gekrümmt. In diesem Fall bildet das Hautfeld 15 eine gekrümmte Fläche

Das aus den zusammengepressten Bauteilsegmenten gebildete Bauteil weist eine hohe Steifigkeit auf und kann je nach Erfordernis ebenfalls zugeschnitten und zum Beispiel in den Randbereichen aufgeschmolzen und verpresst werden.

Mit dem Verfahren können sowohl ebene Platten als auch gekrümmte oder gewölbte Flächenbauteile als versteifte Luftfahrzeugbauteile hergestellt werden. Das auf diese Weise hergestellte Bauteil ist zum Beispiel ein Schalenelement, ein Abdeckelement, ein ebenes Plattenelement und/oder ein gekrümmtes Plattenelement.

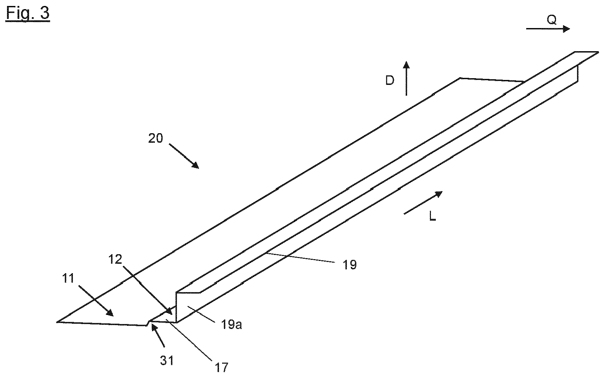

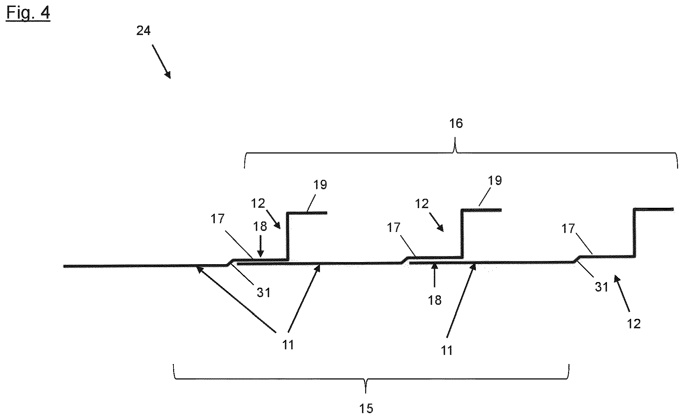

Anhand der **Figuren 3** **und** **4** wird nachfolgend ein weiteres bevorzugtes Ausführungsbeispiel des Herstellungsverfahrens beschrieben, mit einem Bauteilsegment 20 bzw. einem hergestellten Bauteil 24 gemäß einer weiteren bevorzugten Ausführungsform der Erfindung.

Im Unterschied zu dem oben beschriebenen Ausführungsbeispiel ist in dieser Ausführungsform der zweiten Profilbereich 12 des Bauteilsegments 20, der seitlich an den ersten Profilbereich 11 angrenzt, Z-förmig und bildet somit ein Z-Versteifungselement.

Der Verbindungsabschnitt 17 zum flächigen Verschweißen mit dem ersten Profilbereich 11 eines benachbarten Bauteilsegments 20 ist, ebenso wie bei dem in Figur 1 gezeigten Bauteilsegment 10, erhöht gegenüber dem ersten Profilbereich 11 und bildet ebenfalls den Versatz 31.

Beim Zusammenfügen der Bauteilsegmente 20, wie es in Figur 4 gezeigt ist, überlappt der zweiten Profilbereich 12 nur teilweise den ersten Profilbereich 11 des benachbarten Bauteilsegments 20.

Das durch den zweiten Profilbereich 12 gebildete Versteifungsprofil 19 bildet relativ zum Verbindungsabschnitt 17 und zum ersten Profilbereich 11 eine Erhöhung, jedoch mit nur einer Flanke 19a, die senkrecht zur Profilbasis verläuft, welche durch den Verbindungsabschnitt 17 gebildet wird. Auf diese Weise formt der zweite Profilbereich 12 ein Z-Versteifungsprofil. Im verschweißten Zustand der aneinandergefügten Bauteilsegmente 20 ergibt sich somit eine Anzahl von Z-förmigen Versteifungsprofilen bzw. -abschnitten 19, die nebeneinander und parallel zueinander auf der Haut 15 ausgebildet sind, die durch die nebeneinanderliegenden ersten Profilabschnitte 11 der verschweißten Bauteilsegmente 24 gebildet sind und gemeinsam die Versteifungsstruktur 16 bilden.

Die übrigen Merkmale des Bauteilsegments 20 und des damit hergestellten Bauteils 24 entsprechen den Merkmalen, die unter Bezugnahme auf die Figuren 1 und 2 beschrieben sind und auf die hier Bezug genommen wird. Ebenso entspricht das Verfahren zum Herstellen des versteiften flächigen Bauteils 24 in seinen weiteren Details dem oben bereits beschriebenen Verfahren.

Insbesondere können, wie oben beschrieben, auch zur Fertigung der Bauteilsegmente 20 flache Bleche aus dem thermoplastischen Material als Vorerzeugnisse hergestellt werden, die anschließend in einer Presse umgeformt werden, um das Profil für die Bauteilsegmente zu erhalten. Je nach Erfordernis können sowohl das Profil, aus dem die Bauteilsegmente 20 gebildet werden, als auch die einzelnen Bauteilsegmente 20 zurechtgeschnitten und/oder durch Erhitzen und Pressen umgeformt werden. Beim Umformen werden die Bauteilsegmente 20 vor oder nach dem Verschweißen je nach Anwendungsfall zum Beispiel in der Querrichtung Q gekrümmt. In diesem Fall bildet das Hautfeld 15 eine gekrümmte Fläche

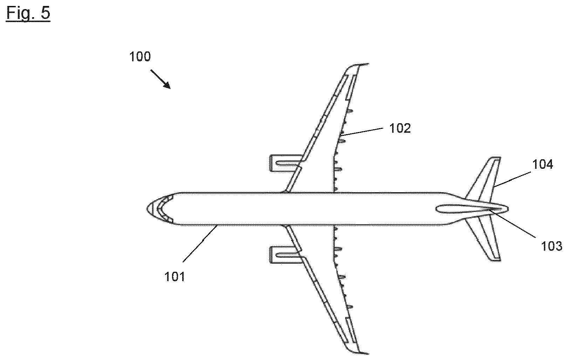

**Figur 5** zeigt ein Luftfahrzeug 100, dessen Rumpf 101, Flügel 102, Seitenleitwerk 103 und Höhenleitwerk 104 sowie weitere Elemente wie etwa Landeklappen mit dem erfindungsgemäßen Verfahren und dem erfindungsgemäßen Bauteilsegment 10, 20 hergestellt sind.

### Bezugszeichenliste:

- 10: Bauteilsegment
- 11: erster Profilbereich
- 12: zweiter Profilbereich
- 14: versteiftes flächiges Bauteil
- 15: Hautfeld, Haut
- 16: Versteifungsstruktur
- 17: Verbindungsabschnitt
- 18: Schweißnaht
- 19: Versteifungsabschnitt
- 19a: Flanke(n)
- 20: Bauteilsegment
- 24: versteiftes flächiges Bauteil
- 31: Versatz

- D: Dickenrichtung
- L: Längsrichtung
- Q: Querrichtung

## Patentansprüche

1. Verfahren zur Herstellung eines versteiften flächigen Bauteils (14, 24) für Luftfahrzeuge, wobei das herzustellende Bauteil (14, 24) ein Hautfeld (15) und eine Versteifungsstruktur (16) umfasst, umfassend die Schritte:
d) Bereitstellen mehrerer Bauteilsegmente (10, 20), die jeweils als ein längliches Profil aus einem faserverstärkten thermoplastischen Material ausgebildet sind, wobei jedes Bauteilsegment (10, 20) einen flächig geformten ersten Profilbereich (11) und einen als Versteifungsprofil geformten zweiten Profilbereich (12) umfasst;
e) Aneinanderfügen der Bauteilsegmente (10, 20), wobei jeweils der erste Profilbereich (11) eines Bauteilsegments (10, 20) mit dem zweiten Profilbereich eines benachbarten Bauteilsegments (10, 20) zumindest teilweise überlappt; und
f) Verschweißen der Bauteilsegmente (10, 20) in den überlappenden Profilbereichen, um das Bauteil (14, 24) zu bilden, wobei die ersten Profilbereiche (11) der Bauteilsegmente (10, 20) das Hautfeld (15) des Bauteils (14, 24) bilden, und die zweiten Profilbereiche (12) der Bauteilsegmente (10, 20) die Versteifungsstruktur (16) des Bauteils (14, 24) bilden.

2. Verfahren nach Anspruch 1, **dadurch gekennzeichnet, dass** sich der erste Profilbereich (11) und der zweite Profilbereich (12) nebeneinander in Längsrichtung (L) des Bauteilsegments (10, 20) erstrecken und seitlich aneinandergefügt werden.

3. Verfahren nach Anspruch 1 oder 2, **dadurch gekennzeichnet, dass** die zweiten Profilbereiche (12) der Bauteilsegmente (10, 20) jeweils mindestens einen flächig ausgebildeten Verbindungsabschnitt (17) zum flächigen Verschweißen und einen in Querrichtung (Q) des jeweiligen Bauteilsegments (10, 20) angrenzenden Versteifungsabschnitt (19) umfassen, der höher oder tiefer liegt als der Verbindungsabschnitt (17).

4. Verfahren nach einem der vorhergehenden Ansprüche, **dadurch gekennzeichnet, dass** die zweiten Profilbereiche (12) der Bauteilsegmente (10, 20) als Omega-, Z-, C-, und/oder T-Versteifungsprofil ausgebildet werden.

5. Verfahren nach einem der vorhergehenden Ansprüche, **dadurch gekennzeichnet, dass** die Bauteilsegmente (10, 20) durch Strangziehen und/oder Rollformen hergestellt werden.

6. Verfahren nach einem der vorhergehenden Ansprüche, **dadurch gekennzeichnet, dass** mehrere Bauteilsegmente (10, 20) aus einem einzigen Profil geschnitten werden, und anschließend seitlich aneinandergefügt werden.

7. Verfahren nach einem der vorhergehenden Ansprüche, **dadurch gekennzeichnet, dass** die Bauteilsegmente (10, 20) zugeschnitten und/oder umgeformt werden.

8. Verfahren nach einem der vorhergehenden Ansprüche, **dadurch gekennzeichnet, dass** die Bauteilsegmente (10, 20) aus einem Hochleistungsthermoplast als Matrixmaterial gefertigt werden.

9. Verfahren nach einem der vorhergehenden Ansprüche, **dadurch gekennzeichnet, dass** zur Bildung des faserverstärkten thermoplastischen Materials ein Matrixmaterial verwendet wird, das ausgewählt wird aus der Gruppe Hochtemperatur-thermoplastische Polymere, Hochleistungskunststoffe, teilkristalline Hochleistungskunststoffe, Polyaryletherketone wie Polyetherketonketon, Polyetherketon, Polyetheretherketon, Polyetheretherketonketon und Polyetherketon-etherketonketon.

10. Verfahren nach einem der vorhergehenden Ansprüche, **dadurch gekennzeichnet, dass** als Bauteil (14, 24) ein Schalenelement, ein Abdeckelement, ein ebenes Plattenelement, und/oder ein gekrümmtes Plattenelement hergestellt wird.

11. Bauteilsegment zur Herstellung eines versteiften flächigen Bauteils für Luftfahrzeuge, wobei das Bauteilsegment (10, 20) als ein Profil aus einem faserverstärkten thermoplastischen Material ausgebildet ist; und
einen flächig geformten ersten Profilbereich (11) und einen als Versteifungsprofil geformten zweiten Profilbereich umfasst;
wobei das Bauteilsegment (10, 20) derart gestaltet ist, dass beim seitlichen Anfügen eines weiteren Bauteilsegments (10, 20) der erste Profilbereich (11) des einen Bauteilsegments (10, 20) mit dem zweiten Profilbereich (12) des anderen Bauteilsegments (10, 20) zumindest teilweise überlappt, um durch Verschweißen der Bauteilsegmente (10, 20) in den überlappenden Profilbereichen das versteifte flächige Bauteil (14, 24) zu bilden,
wobei die ersten Profilbereiche (11) der Bauteilsegmente (10, 20) ein Hautfeld (15) des Bauteils (14, 24) bilden, und die zweiten Profilbereiche (12) der Bauteilsegmente (10, 20) eine Versteifungsstruktur (16) des Bauteils (14, 24) bilden.

12. Bauteilsegment nach Anspruch 11, **dadurch gekennzeichnet, dass** der zweite Profilbereich (12) gegenüber dem ersten Profilbereich (11) derart in der Höhe versetzt ist, dass beim Überlappen der Bauteilsegmente (10, 20) deren flächig geformte erste Profilbereiche (11) eine Ebene bilden, auf der die zweiten Profilbereiche (12) der aneinandergefügten Bauteilsegmente (10, 20) ausgebildet sind.

13. Bauteilsegment nach Anspruch 11 oder 12, **dadurch gekennzeichnet, dass** der zweite Profilbereich (12) als Omega-, Z-, C-, und/oder T-Versteifungsprofil ausgebildet ist.

14. Bauteilsegment nach einem der Ansprüche 11 bis 13, **dadurch gekennzeichnet, dass** es zur Verwendung in dem Verfahren nach einem der Ansprüche 1 bis 10 ausgestaltet sind.

15. Luftfahrzeug, **gekennzeichnet durch** ein Bauteil (14, 24), das mit dem Verfahren nach einem der Ansprüche 1 bis 10 und/oder mit dem Bauteilsegment (10, 20) nach einem der Ansprüche 11 bis 14 hergestellt ist.
